# EUROPÄISCHE PATENTSCHRIFT

(11) **EP 0 891 564 B1**
(45) Veröffentlichungstag und Bekanntmachung des Hinweises auf die Patenterteilung: **03.03.2004**
(21) Anmeldenummer: 97914309.6
(22) Anmeldetag: 25.03.1997
(51) Int. Cl.: G01V 8/14, D03D 47/36

(54) **OPTOELEKTRONISCHE VORRICHTUNG**
OPTO-ELECTRONIC DEVICE
DISPOSITIF OPTOELECTRONIQUE

(30) Priorität: 01.04.1996 DE 19612953
(43) Veröffentlichungstag der Anmeldung: 20.01.1999
(73) Patentinhaber: IRO AB, 523 01 Ulricehamn (SE)
(72) Erfinder: HELLSTRÖM, Jerker, S-440 41 Nol (SE)
(74) Vertreter: Grünecker, Kinkeldey, Stockmair & Schwanhäusser Anwaltssozietät
(86) Internationale Anmeldenummer: PCT/EP1997/001524
(87) Internationale Veröffentlichungsnummer: WO 1997/037247

(56) Entgegenhaltungen:
- DE-A- 2 153 950
- DE-A- 4 207 332
- DE-A- 19 525 260
- FR-A- 2 588 385
- US-A- 4 163 158
- US-A- 4 865 085

## Beschreibung

Die Erfindung betrifft eine optoelektronische Vorrichtung der im Oberbegriff des Anspruchs 1 angegebenen Art.

Bei einer aus EP-A-0 199 059 bekannten Vorrichtung dieser Art sind die auf die Abtastzone an der Speichertrommel ausgerichtete Lichtquelle und der Empfänger in einem Ausleger des Gehäuses des Fadenliefergeräts im Abstand von der Oberfläche der Speichertrommel angeordnet. Unterhalb der Abtastzone ist eine Glasplatte in der Oberfläche der Speichertrommel eingelassen. An der Unterseite der Glasplatte ist als Reflektor eine vollflächige Verspiegelung vorgesehen. Die auf die Speichertrommel in Umfangsrichtung aufgewickelten Fadenwindungen werden axial vorwärts geschoben, so daß jede Fadenwindung quer zu ihrer Längsrichtung durch die Abtastzone durchgeht. Die Vorrichtung dient als Sensor zum Feststellen der axialen Position zumindest der vorderen Windung des Fadenvorrats und spricht auf die Bewegung bzw. Ab- oder Anwesenheit des Fadens mit einem Signal an, das beispielsweise zum Steuern des Drehantriebs des Fadenliefergeräts verwendet wird. Der Empfänger registriert nur die Abschattung durch den Faden bzw. die Änderung der Lichtintensität, wenn dieser die auf den Reflektor gerichteten bzw. vom Reflektor kommenden Lichtstrahlen unterbricht. Konstruktionsbedingt wird aus der Abschattung nur eine relativ schwache Modulation des Signals abgeleitet, speziell bei dünnen Fäden, so daß zum Erzeugen eines aussagefähigen und klaren Nutzsignals hoher Aufwand bei der Auswertung, Verstärkung und Diskriminierung erforderlich ist. Die Vorrichtung ist störungsanfällig bei Verschmutzungen, Störlicht oder bei unvermeidlichen Flusen oder Flusenbüschel. Außerdem ist die Frequenz notwendiger Reinigungs- oder Säuberungszyklen unzweckmäßig hoch.

Es ist zwar bei ähnlichen Vorrichtungen bekannt, bei der optoelektronischen Fadenabtastung zwischen dem Faden und dem Empfänger oder/und zwischen der Lichtquelle und dem Faden eine Blende und/oder Linsen vorzusehen. Dies verbessert jedoch das Ansprechverhalten der Vorrichtung nur unwesentlich und hat auch keinen nennenswerten Einfluß auf die Verschmutzungsempfindlichkeit.

Der Erfindung liegt die Aufgabe zugrunde, eine Vorrichtung der eingangs genannten Art zu schaffen, mit der aus dem Durchgang des Fadens bzw. der Ab- oder Anwesenheit des Fadens in der Abtastzone kräftige und aussagefähige Nutzsignale ableitbar sind und die weitgehend unempfindlich gegen Verschmutzungen, Flusen und Störlicht ist.

Die gestellte Aufgabe wird mit den Merkmalen des Patentanspruchs 1 gelöst.

Da der Faden den wenigstens einen strichbalkenförmigen, sich in Fadenlängsrichtung erstreckenden Reflexionsbereich auch bei relativ langsamer Vorwärtsbewegung auf der Speichertrommel relativ schnell abdeckt bzw. freigibt, d.h. nur sehr kurze Zeit bis zur maximalen Abschattung oder vollständigen Freigabe verstreicht, entstehen am Empfänger sehr kräftige und aussagefähige Nutzsignale. Der schmale aber lange Reflexionsbereich wird bei Abwesenheit des Fadens über seine ganze Länge und Breite beleuchtet und reflektiert wegen seiner großen Länge viel Licht zum Empfänger. Befindet sich der Faden zwischen dem Reflexionsstreifen und der Lichtquelle, dann wird gegebenenfalls der gesamte Reflexionsstreifen abgeschattet. Es ergibt sich dank der Strichbalkenform und der in Bewegungsrichtung des Fadens geringen Breite des Reflexionsstreifens nicht nur ein großer Unterschied der Lichtmenge zwischen dem abgeschatteten und dem freien Zustand, sondern auch ein kräftiger und progressiver bzw. degressiver Übergang von der großen Lichtmenge zur kleinen Lichtmenge und umgekehrt.
Die dadurch bedingte starke Signalmodulation beim Empfänger macht einen hohen elektronischen Aufwand für die Signalauswertung entbehrlich. Das Ansprechverhalten wird durch eine gleichmäßige geringere Veschmutzung kaum verändert. Flusen oder Flusenbüschel können im Regelfall den Reflexionsbereich nicht auf dieselbe Weise abschatten oder freigeben wie der Faden selbst und sind deshalb für korrekte Nutzsignale weitgehend unkritisch.

Derart günstige Eigenschaften resultieren gemäß Anspruch 2 aus einer in etwa der Größenordnung der Dicke der stärksten Fäden entsprechenden Breite des langen Reflexionsbereichs.

Das günstige Ansprechverhalten wird gleichwertig entweder (Anspruch 4) mit wenigstens einem blendenartig wirkenden streifenförmigen Reflexionsbereich des Reflektors oder mit einer Streifenblende mit wenigstens einer streifenförmigen Blendenöffnung erreicht (Anspruch 3), die auf dem Reflektor den Reflexionsbereich optisch begrenzt und den Abstand zwischen der Abtastzone und dem Reflektor nutzt. Der für den Empfänger maßgebende, wenigstens eine Reflexionsbereich wird mit anderen Worten auf einer größeren Reflektorfläche durch die Blendenöffnung der Streifenblende optisch gebildet oder ohne Zuhilfenahme einer Blendenöffnung körperlich durch die längsseitigen, nicht-reflektierenden Zonen abgegrenzt. Da bei der optischen Begrenzung des Reflexionsstreifens durch die Streifenblende angrenzende Bereiche des Reflektors ohnedies nicht zum Reflektieren benutzt werden, könnte auch mit der Streifenblende nur wenigstens ein strichbalkenförmiger Reflexionsbereich benutzt werden.

Bei der Ausführungsform gemäß Anspruch 5 wird durch den Abstand zwischen der Streifenblende und dem Reflexionsstreifen ggfs. eine Tiefenschärfeneinstellung vorbestimmt. Für die Blendenfunktion ist der Abstand von der Lichtquelle oder vom Empfänger zur Blendenöffnung sekundär, da sich die Blendenöffnung auf der dem Reflektor zugewandten Seite des Fadens befindet.

Zweckmäßig ist die Ausführungsform gemäß Anspruch 6, bei der zumindest zwei parallele und getrennte Blendenöffnungen in der Streifenblende vorgesehen sind. Der durch die Abtastzone hindurchgehende Faden unterbricht den Lichtweg zweifach, und zwar jeweils auf nahezu dieselbe Weise.

Bei der Ausführungsform gemäß Anspruch 7, die ohne Streifenblende arbeitet, sind mehrere, d.h. mindestens zwei, Reflexionsbereiche mit dazwischenliegenden Zonen vorgesehen, so daß der Faden beim Durchgang sozusagen in Schritten und damit sehr deutlich vom Empfänger registriert wird. Der Empfänger nimmt den Durchgang über jedem Reflexionsbereich mindestens einmal und kräftig wahr, weil derselbe Faden deutlich erkennbar sozusagen aus dem Nichts auftaucht und wieder ins Nichts verschwindet, sobald er oberhalb der Zone liegt.

Bei der Ausführungsform gemäß Anspruch 8 ist in Schritten eine mehrfache, kräftige Signalmodulation erzielbar. Das Streifenmuster wird zweckmäßigerweise so ausgelegt, daß es für alle gängigen Fadenqualitäten bzw. -stärken verwendbar ist.

Für die Praxis hat sich eine Dimensionierung bewährt, wie sie bei dem Ausführungsbeispiel gemäß Anspruch 9 angegeben ist.

Da eine Speichertrommel eines Fadenliefergeräts, insbesondere eine stationäre Speichertrommel, im Regelfall durch Magneten oder ein Ballastgewicht nur nachgiebig gegen ein Mitdrehen mit der die Speichertrommel fliegend lagernden Antriebswelle gehindert ist, lassen sich im Betrieb des Fadenliefergeräts Drehschwingungen der Speichertrommel nicht vermeiden. Eine nur schwache Krümmung zumindest des Reflexionsbereichs gemäß Anspruch 10 beseitigt einen Störeinfluß von Drehschwingungen, da der Reflexionsbereich auch bei Drehschwingungen der Speichertrommel (Durchmesser ca. 90mm oder mehr) seine Reffexionseigenschaften beibehält.

Die Ausführungsform gemäß Anspruch 11 ist besonders zweckmäßig. Der Faden geht zweimal durch den Lichtweg, d.h. über die Blendenöffnungen der Streifenblende. Darauf spricht der Empfänger mit kräftigen und aussagefähigen Nutzsignalen an, wobei einmal der Lichtweg zum Reflexionsbereich unterbrochen wird, und dann der Lichtweg vom Reflexionsbereich zum Empfänger. Der Reflexionsbereich ist dabei sowohl auf die Lichtquelle als auch auf den Empfänger ausgerichtet, die entsprechend schräggestellt sind.

Bei der alternativen Ausführungsform gemäß Anspruch 12 wird ebenfalls eine kräftige Signalmodulation erzeugt, da der Faden jeden Reflexionsbereich rasch abdeckt und wieder rasch freigibt, und zwar zweckmäßig mit starkem Übergang zwischen der maximalen Abschattung und der maximalen Freigabe.

Die Ausführungsform gemäß Anspruch 13 ist baulich einfach. Die lichtdurchlässige Platte fungiert als Träger des Reflexionsbereichs und der Zonen und begrenzt mit ihrer Oberfläche auch die Abtastzonen.

Bei der Ausführungsform gemäß Anspruch 14 ist die Streifenblende mit der wenigstens einen Blendenöffnung an der Oberfläche der Platte oder knapp unterhalb der Oberfläche angeordnet, während der Reflektor bzw. jeder Reflexionsbereich tief in der Platte oder an deren Unterseite angeordnet ist. Die räumliche Zuordnung von Abtastzone, Streifenblende und Reflektor bzw. Reflexionsbereich ist hierbei optimiert und vorgegeben. Natürlich müssen die Einstellungen und der Abstand zur Lichtquelle und zum Empfänger auf diese Gegebenheiten abgestimmt sein, um ein optimales Ansprechverhalten des Empfängers zu gewährleisten.

Femer sind die Ausführungsvarianten gemäß den Ansprüchen 15, 16 und 17 zweckmäßig.

Bei der Ausführungsform gemäß Anspruch 18 bestimmt die Plattendicke den Abstand zwischen der Streifenblende und dem durchgehenden Reflektor, von dem wegen der optischen Abgrenzung durch die Blendenöffnungen der Streifenblende nur streifenförmige Reflexionsbreiche genutzt werden. Die Blendenöffnungen werden durch den darüber streichenden Faden sauber gehalten. Der Reflektor ist gegen Verschmutzung ohnedies geschützt.

Herstellungstechnisch einfach ist die Ausführungsform gemäß Anspruch 198.

Ein exakter Sitz wie eine leichte Austauschbarkeit der Platte sind bei der Ausführungsform gemäß Anspruch 20 gegeben.

Anhand der Zeichnung werden Ausführungsformen des Erfindungsgegenstandes erläutert. Es zeigen:
- Fig. 1: eine schematische Seitenansicht eines Fadenliefergeräts mit einer Vorrichtung zum Detektieren der Bewegung oder der An- bzw. Abwesenheit eines Fadens in einer Abtastzone,
- Fig. 2A, B: zwei einander zugeordnete schematische Ansichten einer ersten Ausführungsform der Vorrichtung,
- Fig. 3A,B: zwei einander zugeordnete schematische Ansichten einer weiteren Ausführungsform,
- Fig. 4: eine in Umfangsrichtung der Speichertrommel gesehene weitere Ausführungsvariante,
- Fig. 5: eine in Umfangsrichtung der Speichertrommel gesehene weitere Ausführungsvariante,
- Fig. 6A,B: zwei einander zugeordnete schematische Ansichten einer weiteren Ausführungsform,
- Fig. 7: ein in Umfangsrichtung der Speichertrommel gesehene weitere Ausführungsform,
- Fig. 8: eine Perspektivdarstellung eines Details der Vorrichtung,
- Fig. 9: einen Schnitt in der Ebene IX-IX in Fig. 8,
- Fig.10A,B: Detailvarianten in einem Fig. 9 entsprechenden Schnitt.

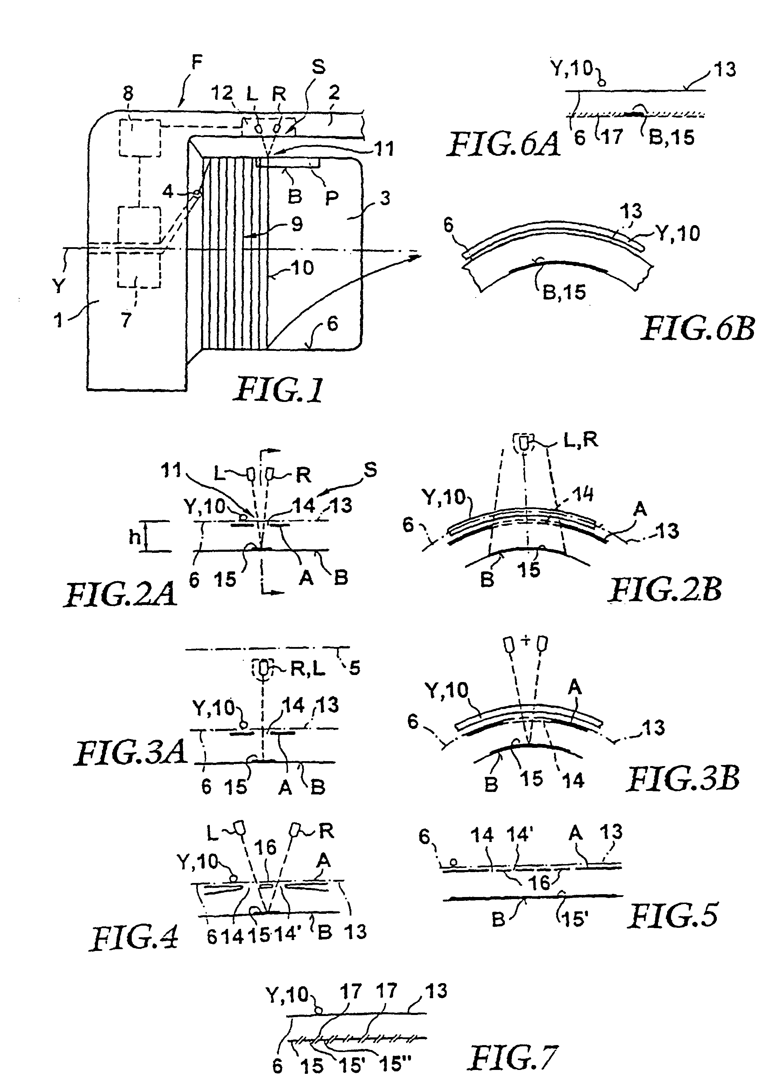

Ein Fadenliefergerät F, wie es zur Versorgung einer Textilmaschine, z.B. einer Webmaschine mit einem Schußfaden üblich ist, weist ein stationäres Gehäuse 1 mit einem Gehäuseausleger 2 auf. Am Gehäuse 1 ist auf einer durch ihre Achse 5 angedeuteten Antriebswelle eine Speichertrommel 3 stationär angeordnet. Der in Fig. 1 von links in das Gehäuse 1 durch einen hohlen Abschnitt der Antriebswelle zugeführte Faden Y wird mittels eines zur Drehung antreibbaren Aufwickelorgans 4 in nebeneinanderliegenden, gegebenenfalls separierten, Fadenwindungen 9 als Zwischenvorrat auf die mit 6 bezeichnete Oberfläche der Speichertrommel 3 aufgewickelt und durch die Textilmaschine überkopf der Speichertrommel 3 bedarfsabhängig abgezogen. Im Gehäuse ist ein Antriebsmotor 7 für das Aufwickelorgan 4 untergebracht, der von einer Steuervorrichtung 8 gesteuert wird. Die Steuervorrichtung 8 erhält unter anderem Steuersignale von einer Vorrichtung S (Faden - sensor), die im Ausleger 2 angeordnet ist. Der Antriebsmotor 7 wird beispielsweise so gesteuert, daß der Faden Y auf die Speichertrommel 3 aufgewickelt wird, bis die in Abzugsrichtung vorderste Windung 10 eine Abtastzone 11 erreicht. Dann wird der Antriebsmotor 7 abgestellt und verzögert und erst wieder beschleunigt, wenn die Abtastzone 11 vom Faden freigelegt wird.

Die Vorrichtung S enthält wenigsten eine Lichtquelle L und wenigstens einen signalerzeugenden Empfänger R (Lichtdiode und Fototransistor), die in einen Schaltkreis 12 integriert sind. Versenkt unterhalb der Oberfläche 6 der Speichertrommel 3 ist ein Reflektor B vorgesehen, der das von der Lichtquelle L kommende Licht zum Empfänger R reflektiert. Zweckmäßig ist der Reflektor B an einer in die Oberfläche 6 der Speichertrommel 3 eingelassenen, lichtdurchlässigen Platte P angeordnet, deren Außenseite mit der Oberfläche 6 bündig ist. Die Platte P bzw. der Reflektor B können mit der schwachen Umfangskrümmung der Speichertrommel 3 gekrümmt sein.

Bei der ersten Ausführungsform der Vorrichtung S gemäß den Fig. 2A und 2B existiert in der Abtastzone 11 eine Fadendurchgangsebene 13, die mit der Oberfläche 6 der Speichertrommel korrespondieren kann. In der Fadendurchgangsebene 13 oder knapp unterhalb derselben ist eine Streifenblende A vorgesehen, die eine streifenförmige Blendenöffnung 14 aufweist, die sich annähernd in Umfangsrichtung erstreckt und deren Länge wesentlich größer als ihre in Richtung der Achse 5 der Speichertrommel gesehene Breite ist. Im Abstand h unterhalb der Fadendurchgangsebene 13 bzw. unterhalb der Streifenblende A befindet sich der Reflektor B, von dem zur Abtastung des Fadens Y, 10 nur ein durch die Blendenöffnung 14 optisch begrenzter strichbalkenförmiger Reflexionsbereich 15 benutzt wird. Die Breite der Blendenöffnung 14 entspricht z.B. in etwa der größten vorkommenden Fadenstärke, d.h. sie kann auch etwas größer oder etwas kleiner sein. In Umfangsrichtung hat die Blendenöffnung 14 bzw. der Refiexionsbereich 15, z.B. eine Länge zwischen 8 und 20 mm. Die Lichtaustrittsrichtung aus der Lichtquelle L liegt in etwa radial auf die Achse 5 und ist in der die Achse 5 enthaltenden Radialebene etwas schräggestellt, so daß das Reflexionslicht vom Reflexionsbereich 15 auf die in derselben Ebene und ebenfalls schräg angeordneten Empfangsfläche des Empfängers R trifft. Der Abstand der Lichtquelle von der Fadendurchgangsebene 13 bzw. der Streifenblende A sowie der Abstand h zwischen der Streifenblende A und dem Reflektor B sind so gewählt, daß sich bei Durchgang des Fadens über die Blendenöffnung 14 eine genügend starke Signalmodulation beim Empfänger R einstellt.

Bei der Ausführungsform gemäß Fig. 3A, 3B sind der Empfänger R und die Lichtquelle L in etwa radial auf die Achse 5 der Speichertrommel ausgerichtet und in Umfangsrichtung gegeneinander versetzt. Die Anordnung der Streifenblende A und des Reflektors B mit dem Reflexionsbereich 15 entsprechen den von Fig. 2A und 2B.

Bei der Ausführungsform gemäß Fig. 4 sind die Lichtquelle und der Empfänger ähnlich wie in den Fig. 2A und 2B angeordnet Es könnten auch zwei Lichtquellen und/oder zwei Empfänger R - zwecks Differentialauswertung - vorgesehen sein. Die Streifenblende A weist bei dieser Ausführungsform zwei streifenförmige Blendenöffnungen 14, 14' auf, die durch eine nicht-reflektierende Zone 16 voneinander getrennt sind, wobei die Blendenöffnung 14 den Reflexionsbereich 15 auf dem Reflektor B optisch begrenzt. Die Lichtaustrittsrichtung der Lichtquelle L ist so ausgerichtet, daß das Reflexionslicht vom Reflexionsbereich 15 auf den Empfänger R trifft. Der Faden Y, 10 schattet beim Durchgang (in Fig. 4 z.B. von links nach rechts) den Strahlengang zweifach ab.

Bei der Ausführungsform gemäß Fig. 5 weist die Streifenblende A sogar mehr als zwei Blendenöffnungen 14, 14' auf, die jeweils durch eine Zone 16 voneinander getrennt sind. Der Reflektor B ist durchgehend ausgebildet und wird optisch in mehrere Reflexionsbereiche 15' unterteilt. Die Blendenöffnungen 14, 14' sind gleich breit. Die Zonen 16 sind mit einer Breite ausgebildet, die sich nach der Schrägstellung der Lichtaustrittsrichtung aus der Lichtquelle richtet. Zweckmäßigerweise sind die Zonen 16 untereinander gleich breit.

Bei der Ausführungsform gemäß Fig. 6A und 6B ist der Reflexionsbereich 15 des Reflektors B als körperlich schmaler Streifen ausgebildet, der in etwa in Umfangsrichtung verläuft. Zu beiden Seiten des Reflexionsbereichs 15 sind nicht-reflektierende Zonen 17 vorgesehen. Eine Streifenblende fehlt hier.

Die zu den vorhergehenden Ausführungsformen erläuterten nicht-reflektierenden Zonen können beliebig ausgebildet werden, vorausgesetzt, sie absorbieren das auftreffende Licht oder reflektieren auftreffendes Licht in keinem Fall zum Empfänger R.

Bei der Ausführungsform gemäß Fig. 7 sind in axialer Richtung der Speichertrommel mehrere Reflexionsbereiche 15, 15', 15" parallel zueinander aufgereiht, und zwar in einem Abstand unterhalb der Fadenübergangsebene 13. Jeweils zwei benachbarte Reflexionsbereiche sind durch eine Zone 17 mit Streifenform voneinander getrennt.

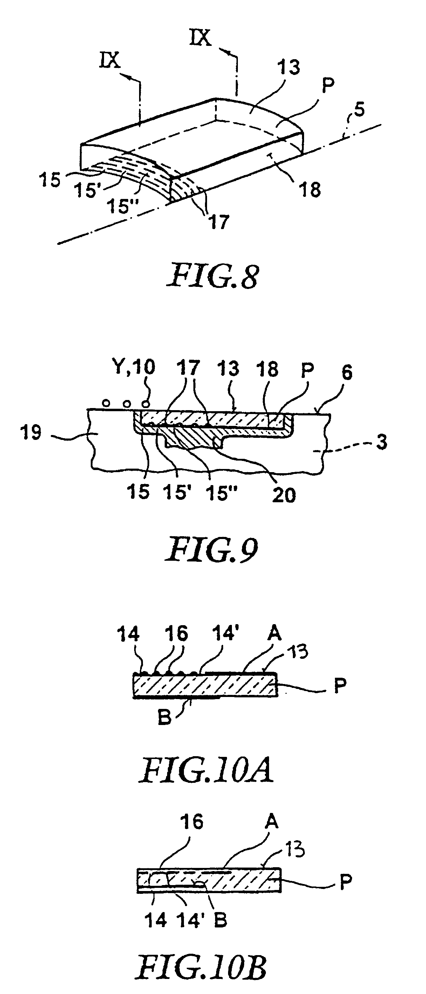

Fig. 8 und 9 verdeutlichen eine Ausführungsform, bei der die Reflexionsbereiche 15, 15',15" in einer lichtdurchlässigen Platte P, z.B. aus Glas oder Plexiglas, angeordnet sind. Die Oberseite der Platte, die gemäß Fig. 1 in der Speichertrommel 3 versenkt angeordnet wird, definiert die Fadendurchgangsebene 13. Die Reflexionsbereiche 15, 15', 15" sind an der oder bei der Unterseite 18 der Platte vorgesehen und verlaufen in Umfangsrichtung der Speichertrommel, deren Achse bei 5 angedeutet ist. Im Schnitt gemäß Fig. 9 ist zu ersehen, daß die Reflexionsbereiche 15, 15', 15" durch körperlich in die Platte P bzw. deren Unterseite 18 integriert und durch Zonen 17 in Streifenform voneinander getrennt sind. Es ist ein, vorzugsweise regelmäßiges, Streifenmuster aus Reflexionsstreifen 15, 15', 15" und Abblendzonen 17 gebildet, das sich entweder über die gesamte Länge der Platte P oder zumindest über einen begrenzten axialen Bereich der Platte P erstreckt. Die Platte P ist in einem in der Speichertrommel 3 angebrachten Halter 20 gefaßt und läßt sich austauschen. Bei einer Ausbildung der Speichertrommel 3 als Stabkäfig ist der Halter 20 zweckmäßigerweise in einem Stab 19 vorgesehen.

Alternativ könnte die Platte gemäß Fig. 10A (entsprechend dem Ausführungsbeispiel von Fig. 5) an ihrer Unterseite mit einem durchgehenden Reflektor B (einer Verspiegelung) versehen sein, während an der Oberseite die Streifenblende A mit den Blendenöffnungen 14 und den dazwischenliegenden Zonen 16 aufgebracht ist. In der Streifenblende A liegen mindestens zwei Blendenöffnungen 14, 14' vor.

Bei der Ausführungsform gemäß Fig. 10B, die funktionell der Ausführungsform der Fig. 10A entspricht, ist die Streifenblende A mit ihren Blendenöffnungen 14, 14' und den Zonen 16 unterhalb der Oberseite der Platte P in dieser angeordnet, und zwar mit einem Abstand vom dem innerhalb der Platte B angeordneten Reflektor B.

Die Platte P gemäß Fig. 9 kann so hergestellt werden, daß an der Unterseite 18 zunächst eine durchgehende Verspiegelung, zumindest in dem axialen Bereich, in dem später die Reflexionsbereiche 15, 15', 15" benötigt werden, versehen wird. Dann werden die Zonen 17 durch Ätzen, Schleifen oder Schneiden geformt und gegebenenfalls mit lichtabsorbierendem Material (geschwärzt) ausgefüllt. Es ist auch denkbar, zunächst die Nuten oder Strukturierungen zu formen, die später die Zonen 17 definieren, und nachfolgend die glatten Unterseitenbereiche mit Verspiegelungen zu versehen, die die Reflexionsbereiche 15, 15', 15" bilden. Dabei wird zweckmäßigerweise zunächst ein Ring aus lichtdurchlässigem Material gebildet, dessen Innenseite mit den Reflexionsbereichen 15, 15', 15" und den Zonen 17 fertiggestellt wird. Dann wird der Ring in einzelne Sektionen unterteilt, deren jede eine der Platten P der Fig. 8 und 9 ergibt.

## Patentansprüche

1. Optoelektronische Vorrichtung (S) zum Detektieren der Bewegung bzw. Anund Abwesenheit eines quer zu seiner Längsrichtung durch eine Abtastzone (11) auf der Speichertrommel eines Fadenliefergerätes (F) durchgehenden Fadens (Y) in der Abtastzone, mit wenigstens einer von außerhalb der Speichertrommel (3) auf die Abtastzone (11) ausgerichteten Lichtquelle (L), wenigstens einem mit einem Abstand auf der der Lichtquelle (L) abgewandten Seite der Abtastzone an der Speichertrommel (3) angeordneten Reflektor (B) mit einem Reflexionsbereich, und wenigstens einem signalerzeugenden, auf die Abtastzone ausgerichteten Em pfänger (R) außerhalb der Speichertrommel (3), **dadurch gekennzeichnet, daß** der Reflexionsbereich des Reflektors (B) wenigstens einreflektierender Strichbalken (15, 15', 15") ist, der in Achsrichtung der Speichertrommel (3) schmal ist und sich mit einer ein Mehrfaches der Breite betragenden Länge in etwa in Umfangsrichtung der Speichertrommel (3) erstreckt.

2. Vorrichtung nach Anspruch 1, **dadurch gekennzeichnet, daß** der Strichbalken (15, 15', 15") mit einer Breite in der Größenordnung der Dicke des dicksten zur Verarbeitung kommenden Fadens (4) ausgebildet ist.

3. Vorrichtung nach Anspruch 1, **dadurch gekennzeichnet, daß** der Strichbalken (15, 15', 15") an seinen in Umfangsrichtung der Speichertrommel (3) verlaufenden Längsseiten optisch eingegrenzt ist durch eine zwischen dem Reflektor (B) und der Durchgangsebene (13) des Fadens (Y) parallel zum Reflektor (B) angeordnete Streifenblende (A).

4. Vorrichtung nach Anspruch 1, **dadurch gekennzeichnet, daß** der Strichbalken (15, 15', 15") abgegrenzt ist durch nicht-reflektierende Zonen (17).

5. Vorrichtung nach Anspruch 3, **dadurch gekennzeichnet, daß** die Streifenblende (A, 14, 14') näher bei der Durchgangsebene (13) des Fadens (Y) angeordnet ist als beim Strichbalken (15, 15', 15"), vorzugsweise vom Faden (Y) überfahrbar in der Durchgangsebene (13) des Fadens.

6. Vorrichtung nach Anspruch 3, **dadurch gekennzeichnet, daß** die Streifenblende (A) mehrere parallele, durch nicht-reflektierende Zonen (16) voneinander getrennte Blendenöffnungen (14, 14', 14") aufweist und entsprechend viele Strichbalken (15, 15', 15") abgrenzt.

7. Vorrichtung nach Anspruch 4, **dadurch gekennzeichnet, daß** mehrere parallele Strichbalken (15, 15', 15") mit dazwischenliegenden streifenförmigen nicht-reflektierenden Zonen (17) vorgesehen sind.

8. Vorrichtung nach Anspruch 7, **dadurch gekennzeichnet, daß** die Strichbalken (15, 15', 15") und die Zonen (17) in etwa gleich breit sind und ein regelmäßiges Streifenmuster bilden.

9. Vorrichtung nach wenigstens einem der Ansprüche 1 bis 8, **dadurch gekennzeichnet, daß** die Breite jedes Strichbalkens (15, 15', 15") und/oder jeder Blendenöffnung (14, 14', 14") der Streifenblende (A) zwischen ca. 0,3 und ca. 1,5 mm beträgt, vorzugsweise bei etwa 1,0 mm liegt.

10. Vorrichtung nach wenigstens einem der Ansprüche 1 bis 9, **dadurch gekennzeichnet, daß** die Lichtaustrittsrichtung der Lichtquelle (L) in einer die Achse (5) der Speichertrommel (3) enthaltenden Ebene schräg auf die Achse der Speichertrommel weist, und daß demselben Strichbalken (15, 15', 15") mindestens zwei parallele und in Achsrichtung der Speichertrommel durch eine nicht-reflektierende Zone (16) beabstandete Blendenöffnungen (14, 14') der Streifenblende (A) zugeordnet sind, vorzugsweise eine Lichteintritts- und eine Lichtaustrittsblendenöffnung.

11. Vorrichtung nach wenigstens einem der Ansprüche 1 bis 9, **dadurch gekennzeichnet, daß** die Lichtaustrittsrichtung der Lichtquelle (L) in einer Radialebene der Speichertrommel (3) liegt und mit einem Radius auf die Lichtquelle (L) einen spitzen Winkel einschließt.

12. Vorrichtung nach wenigstens einem der Ansprüche 1 bis 11, **dadurch gekennzeichnet, daß** die Streifenblende (A) und der Strichbalken (15, 15', 15") in etwa mit der schwachen Krümmung der Oberfläche (6) der Speichertrommel (3) gekrümmt sind.

13. Vorrichtung nach wenigstens einem der Ansprüche 1 bis 12, **dadurch gekennzeichnet, daß** eine lichtdurchlässige Platte (P) in der Oberfläche (6) der Speichertrommel (3) versenkt angeordnet ist, deren Außenseite die Abtastzone (11) begrenzt bzw. die Fadendurchgangsebene (13) bildet, und daß der Strichbalken (15, 15', 15") mit den Zonen (17) im Inneren der Platte (P) oder an deren Unterseite (18) angeordnet ist.

14. Vorrichtung nach wenigstens einem der Ansprüche 1 bis 12, **dadurch gekennzeichnet, daß** eine lichtdurchlässige Platte (P) in der Oberfläche (6) der Speichertrommel (3) versenkt angeordnet ist, deren Außenseite die Abtastzone (11) begrenzt bzw. die Fadendurchgangsebene (13) bildet, daß die Streifenblende (A) an der Oberfläche der Platte (P) oder knapp unterhalb der Oberfläche in der Platte (P) angeordnet ist, und daß der Reflektor (P) bzw. jeder Strichbalken (15, 15', 15") tiefer im Inneren der Platte (P) oder an deren Unterseite (18) angeordnet ist bzw. sind.

15. Vorrichtung nach den Ansprüchen 13 oder 14, **dadurch gekennzeichnet, daß** die Platte (P) eine Stärke zwischen 3,0 und 10,0 mm, vorzugsweise bei etwa 5,0 mm hat und vorzugsweise, mit der Krümmung der Oberfläche (6) der Speichertrommel (3) gekrümmt ist.

16. Vorrichtung nach den Ansprüchen 13 oder 14, **dadurch gekennzeichnet, daß** die Platte (P) in Umfangsrichtung zwischen 10 und 30 mm, vorzugweise etwa 13 mm, breit und in Achsrichtung der Speichertrommel mehr als 10 mm lang ist.

17. Vorrichtung nach Anspruch 14, **dadurch gekennzeichnet, daß** an der Unterseite (18) der Platte (P), vorzugsweise in einem in Achsrichtung ca. 10 mm langen Abschnitt, ein Streifenmuster mit abwechselnden Strichbalken (15, 15', 15") und nicht-reflektierenden Zonen (17) angeordnet ist.

18. Vorrichtung nach Anspruch 14, **dadurch gekennzeichnet, daß** an der Oberseite der Platte (P) mehrere getrennte, parallele Blendenöffnungen (14, 14', 14") der Streifenblende (A) und an der Unterseite (18) ein durchgehender Reflektor (B) vorgesehen sind.

19. Vorrichtung nach Anspruch 13, **dadurch gekennzeichnet, daß** in den Strichbalken (15, 15', 15") auf die im wesentlichen ebene oder geglättete Unterseite (18) der Platte (P) jeweils eine Spiegelschicht aufgebracht ist, und daß die nicht-reflektierenden Zonen (17) durch aufgerauhte strukturierte oder ausgehöhlte oder geätzte, gegebenenfalls lichtabsorbierend belegte, Flächenbereiche in der Unterseite (18) der Platte (P) gebildet sind.

20. Vorrichtung nach wenigstens einem der Ansprüche 12 bis 18, **dadurch gekennzeichnet, daß** die Platte (P) austauschbar oder umsetzbar bzw. verdrehbar in einem in der Speichertrommel (3) angeordneten Halter (20) sitzt.

## Claims

1. Opto-electronic device (S) for detecting the movement, absence or presence of a yam (Y) in a detection zone (11), respectively, said yam passing said detection zone (11) on a storage drum (3) of a yam feeder (F) laterally to the yam longitudinal direction, comprising at least one light source (L) directed from outside of storage drum (3) towards said detection zone (11), at least one reflection area defining reflector (B) fitted to storage drum (3) opposite to said light source (L) with a distance behind the detection zone (11), and at least one signal generating receiver (R) outside of said storage drum and directed towards the detection zone (11), **characterised in that** the reflection area of said reflector (B) is at least one reflecting bar (15, 15', 15") which has narrow width in axial direction of the storage drum (3), and which extends in the circumferential direction of the storage drum (3) with a longitudinal extension which is a multiple of its width.

2. Device as in claim 1, **characterised in that** said bar (15, 15', 15") is formed with a width in the dimensional order of the thickness of the thickest yam (Y) (10) available for processing.

3. Device as in claim 1, **characterised in that** said bar (15, 15', 15") has its length sides extending in circumferential direction of the storage drum (3) and is optically bordered by a strip diaphragm (A) situated between said reflector (B) and the yam passing plane (13) and parallel to reflector (B).

4. Device as in claim 1, **characterised in that** said bar (15, 15', 15") is bordered by non-reflecting zones (17).

5. Device as in claim 3, **characterised in that** said strip diaphragm (A 14, 14') is situated closer to the yarn passing plane (13) than to the bar (15, 15', 15") and is advantageously provided in the yam passing plane (13) so that the yam may slide over it.

6. Device as in claim 3, **characterised in that** said strip diaphragm (A) has several parallel diaphragm apertures (14, 14', 14") separated from each other by non-reflecting zones (17) and that said strip diaphragm is optically defining a corresponding number of bars (15, 15', 15").

7. Device as in claim 4, **characterised in that** several parallel bars (15, 15', 15") are provided with intermediate strip shaped non-reflecting zones (17).

8. Device as in claim 7, **characterised in that** said bars (15, 15', 15") and said zones (17) are of the same width and form a regular strip pattern.

9. Device as in at least one of claims 1 to 8, **characterised in that** the width of each bar (15, 15', 15") and/or of each diaphragm aperture (14, 14', 14") of said strip diaphragm (A) is between about 0.3 and 1.5 mm, preferably about 1.0 mm.

10. Device as in at least one of claims 1 to 9, **characterised in that** the light exiting direction of light source (L) is obliquely running to the axis of said storage drum (3) in a plane containing the axis (5) of said storage drum (3), and that to the same bar (15, 15', 15") at least two parallel diaphragm apertures (14, 14', 14") of said strip diaphragm (A) are associated which are separated in axial direction of said storage drum (3) by a non-reflecting zone (16), preferably one light entrance - and one light exiting ― diaphragm aperture, respectively.

11. Device as in at least one of claims 1 to 9, **characterised in that** the light exiting direction of said light source (11) is situated in a radial plane of said storage drum (3) and is including an acute angle with a radius pointing to the light source (L).

12. Device as in at least one of claims 1 to 11, **characterised in that** said strip diaphragm (A) and said bar (15, 15', 15") are curved with essentially the same weak curvature as the surface (6) of said storage drum (3).

13. Device as in at least one of claims 1, to 12, **characterised in that** a light permeable plate (P) is countersunk into the surface (6) of the storage drum (3), that the outer surface of said plate (P) defines the detection zone (11) or said yam passing plane (13), respectively, and that said bar (15, 15', 15") as well as said zone (17) are situated inside the plate (P) or at its lower surface (18).

14. Device as in at least one of claims 1 to 12, **characterised in that** a light permeable plate (P) is countersunk into the surface (6) of the storage drum (3), that the outer side of said plate (P) defines said detection zone (11) or said yam passing plane (13), respectively, that said diaphragm (A) is located at the upper surface of plate (P) or just below said upper surface and inside plate (P), and that said reflector (B) or each bar (15, 15', 15"), respectively, is situated deeper inside plate (P) or at its lower surface (18).

15. Device as in claims 13 or 14, **characterised in that** said plate (P) has a thickness between 3.0 and 10.0 mm, preferably about 5.0 mm and is, preferably curved with the same curvature as said surface (6) of said storage drum (3).

16. Device as in claims 13 or 14, **characterised in that** said plate (P) has a width in circumferential direction of about 10 to 30 mm, preferably about 30 mm, and has a longitudinal extension of more than 10 mm in axial direction of said storage drum (3).

17. Device as in claim 14, **characterised in that** at the lower surface (18) of plate (P), preferably in a portion having a longitudinal extension of about 10 mm in axial direction, a strip pattern of alternating bar (15, 15', 15") and non-reflecting zones (17) is arranged.

18. Device as in claim 14, **characterised in that** at the upper surface of plate (P) several separated parallel diaphragm apertures (14, 14', 14") of said strip diaphragm (A) and at the lower surface (18) a continuous reflector (B) are provided.

19. Device as in claim 13, **characterised in that** a reflective coating is provided on the bar (15, 15', 15") at the essentially plain or smoothened lower surface (18) of the plate (P), and that said non-reflecting zones (17) are formed by roughened, structured, excavated or etched area portions in the lower surface (18) of plate (P), occasionally covered by light absorbing material.

20. Device as in at least one of claims 12, to 18, **characterised in that** said plate (P) is positioned replaceable, turnable or shiftable in a holder (20), situated in the storage drum (3).

## Revendications

1. Dispositif optoélectronique (S) pour détecter dans la zone de balayage le mouvement et/ou la présence et l'absence d'un fil (Y) traversant perpendiculairement à sa direction longitudinale une zone de balayage (11) sur un tambour de stockage d'un appareil de fourniture de fil (F), avec au moins une source de lumière (L) dirigée depuis l'extérieur du tambour de stockage (3) vers la zone de balayage (11), au moins un réflecteur (B) comprenant une zone de réflexion et disposé sur le tambour de stockage (3) avec un espacement sur le côté de la zone de balayage opposé à la source de lumière (L) et au moins un récepteur (R) placé en dehors du tambour de stockage (3), qui produit un signal et qui est dirigé sur la zone de balayage, **caractérisé en ce que** la zone de réflexion du réflecteur (B) est au moins une poutre à barres réfléchissante (15, 15', 15"), qui est étroite dans la direction axiale du tambour de stockage (3) et qui s'étend approximativement dans la direction périphérique du tambour de stockage (3) avec une longueur constituant un multiple de la largeur.

2. Dispositif selon la revendication 1, **caractérisé en ce que** la poutre à barres (15, 15', 15") est configurée avec une largeur qui est de l'ordre de grandeur de l'épaisseur du fil (4) le plus épais à mettre en oeuvre.

3. Dispositif selon la revendication 1, **caractérisé en ce que**, sur ses côtés longitudinaux s'étendant en direction périphérique du tambour de stockage (3), la poutre à barres (15, 15', 15") fait l'objet d'une délimitation optique par un obturateur à strie (A) disposé parallèlement au réflecteur (B) entre le réflecteur (B) et le plan de passage (13) du fil (Y).

4. Dispositif selon la revendication 1, **caractérisé en ce que** la poutre à barres (15, 15', 15") est délimitée par des zones non-réfléchissantes (17).

5. Dispositif selon la revendication 3, **caractérisé en ce que** l'obturateur à strie (A, 14, 14') est disposé plus près du plan de passage (13) du fil (Y) que de la poutre à barres (15, 15', 15"), de préférence dans le plan de passage (13) du fil en pouvant être franchi par le fil (Y).

6. Dispositif selon la revendication 3, **caractérisé en ce que** l'obturateur à strie (A) comprend plusieurs ouvertures d'obturateur (14, 14', 14") parallèles et séparées entre elles par des zones non réfléchissantes (16) et délimite un nombre correspondant de poutres à barres (15, 15', 15").

7. Dispositif selon la revendication 4, **caractérisé en ce que** plusieurs poutres à barres (15, 15', 15") parallèles avec des zones en forme de stries non-réfléchissantes (17) placées entre elles sont prévues.

8. Dispositif selon la revendication 7, **caractérisé en ce que** les poutres à barres (15, 15', 15") et les zones (17) ont approximativement la même largeur et forment un modèle de stries régulier.

9. Dispositif selon au moins l'une quelconque des revendications 1 à 8, **caractérisé en ce que** la largeur de chaque poutre à barres (15, 15', 15") et/ou de chaque ouverture d'obturateur (14, 14', 14") de l'obturateur à strie (A) est située entre environ 0,3 et environ 1,5 mm et est de préférence d'environ 1,0 mm.

10. Dispositif selon au moins l'une quelconque des revendications 1 à 9, **caractérisé en ce que** la direction de sortie de la lumière de la source de lumière (L) est, dans un plan contenant l'axe (5) du tambour de stockage (3), orientée en biais sur l'axe du tambour de stockage et **en ce qu'**à la même poutre à barres (15, 15', 15") sont associées au moins deux ouvertures d'obturateur (14, 14') de l'obturateur à strie (A), de préférence une ouverture d'obturateur d'entrée de lumière et une ouverture d'obturateur de sortie de lumière, qui sont parallèles et qui sont espacées en direction axiale du tambour de stockage par une zone non-réfléchissante (16).

11. Dispositif selon au moins l'une quelconque des revendications 1 à 9, **caractérisé en ce que** la direction de sortie de la lumière de la source de lumière (L) se trouve dans un plan radial du tambour de stockage (3) et forme un angle pointu avec un rayon dirigé vers la source de lumière (L).

12. Dispositif selon au moins l'une quelconque des revendications 1 à 11, **caractérisé en ce que** l'obturateur à strie (A) et la poutre à barres (15, 15', 15") sont cintrés en épousant à peu près le faible rayon de cintrage de la surface (6) du tambour de stockage (3).

13. Dispositif selon au moins l'une quelconque des revendications 1 à 12, **caractérisé en ce qu'**une plaque transparente (P), dont le côté extérieur délimite la zone de balayage (11) ou forme le plan de passage (13) du fil, est disposée dans la surface (6) du tambour de stockage (3) en étant noyée dans celle-ci et **en ce que** la poutre à barres (15, 15', 15") est disposée avec les zones (17) à l'intérieur de la plaque (P) ou sur le côté inférieur (18) de celle-ci.

14. Dispositif selon au moins l'une quelconque des revendications 1 à 12, **caractérisé en ce qu'**une plaque transparente (P), dont le côté extérieur délimite la zone de balayage (11) ou forme le plan de passage (13) du fil, est disposée dans la surface (6) du tambour de stockage (3) en étant noyée dans celle-ci, **en ce que** l'obturateur à strie (A) est disposé sur la surface de la plaque (P) ou juste en dessous de la surface dans la plaque (P) et **en ce que** le réflecteur (P) ou chaque poutre à barres (15, 15', 15") est disposé(e) plus loin à l'intérieur de la plaque (P) ou sur son côté inférieur (18).

15. Dispositif selon les revendications 13 ou 14, **caractérisé en ce que** la plaque (P) a une épaisseur située entre 3,0 et 10,0 mm, de préférence d'environ 5,0 mm et est de préférence cintrée en épousant le rayon de cintrage de la surface (6) du tambour de stockage (3).

16. Dispositif selon les revendications 13 ou 14, **caractérisé en ce que** dans le sens périphérique la plaque (P) a une largeur située entre 10 et 30 mm, de préférence d'environ 13 mm, et dans le sens axial du tambour de stockage une longueur supérieure à 10 mm.

17. Dispositif selon la revendication 14, **caractérisé en ce que** sur le côté inférieur (18) de la plaque (P), de préférence sur une section d'une longueur d'environ 10 mm en direction axiale, est disposé un modèle de stries avec des poutres à barres (15, 15', 15") alternant avec des zones non-réfléchissantes (17).

18. Dispositif selon la revendication 14, **caractérisé en ce que** sur le côté supérieur de la plaque (P) sont prévues plusieurs ouvertures d'obturateur (14, 14', 14") séparées et parallèles de l'obturateur à strie (A) et **en ce que** sur le côté inférieur (18) est prévu un réflecteur continu (B).

19. Dispositif selon la revendication 13, **caractérisé en ce que** dans les poutres à barres (15, 15', 15"), sur le côté inférieur (18) sensiblement plane ou égalisé de la plaque (P), est appliquée respectivement une couche réfléchissante et **en ce que** les zones non-réfléchissantes (17) sont formées par des sections de surfaces qui sont situées sur le côté inférieur (18) de la plaque (P) et qui sont rendues rugueuses, structurées ou creusées ou soumises à une attaque chimique et éventuellement recouvertes d'une couche absorbant la lumière.

20. Dispositif selon au moins l'une quelconque des revendications 12 à 18, **caractérisé en ce que** la plaque (P) est placée dans un support (20) disposé dans le tambour de stockage (3) de manière à pouvoir être interchangée ou déplacée ou tournée.
